Europäisches Patentamt

European Patent Office

Office européen des brevets

(11) Publication number: **0 322 043 B1**

(12) **EUROPEAN PATENT SPECIFICATION**

(45) Date of publication of patent specification: **08.06.94**  (51) Int. Cl.⁵: **C08L  73/00**, //(C08L73/00, 23:02)

(21) Application number: **88202902.8**

(22) Date of filing: **15.12.88**

The file contains technical information submitted after the application was filed and not included in this specification

(54) **Polyketone polymer composition.**

(30) Priority: **21.12.87 US 135429**
**08.06.88 US 203960**
**21.12.87 US 135428**
**24.05.88 US 198546**

(43) Date of publication of application:
**28.06.89 Bulletin  89/26**

(45) Publication of the grant of the patent:
**08.06.94 Bulletin  94/23**

(84) Designated Contracting States:
**AT BE CH DE ES FR GB GR IT LI NL SE**

(56) References cited:
**US-A- 3 929 727**

**PATENT ABSTRACTS OF JAPAN, Vol 11 Nr 315, October 14, 1987 page (C-451)[2762]& JP-A-62 100 463 (Sekisui Chem. Co Ltd)**

(73) Proprietor: **SHELL INTERNATIONALE RE-SEARCH MAATSCHAPPIJ B.V.**
**Carel van Bylandtlaan 30**
**NL-2596 HR Den Haag(NL)**

(72) Inventor: **George, Eric Richard**
**13703 Overbrook Lane**
**Houston Texas 77077(US)**
Inventor: **Lutz, Robert Gardiner**
**632 Vista Grande Place**
**Santa Rosa California 95401(US)**
Inventor: **Byrd, Paul Sharon**
**8203 Brinkworth**
**Houston Texas 77070(US)**
Inventor: **Danforth, Richard Louis**
**2306 Wellingford Drive**
**Missouri City Texas 77459(US)**
Inventor: **Smutny, Edgar Josef**
**1701 Maryland Street**
**Houston Texas 77006(US)**

**Description**

This invention relates to an improved polyketone polymer composition, to a process for preparing such compositions, and to an article of manufacture made from such a composition.

The class of polymers of carbon monoxide and olefin(s) has been known for a number of years.

More recently, the class of linear alternating polymers of carbon monoxide and at least one ethylenically unsaturated hydrocarbon, e.g., ethene or ethene and propene, has become of greater interest in part because of the availability of improved processes for the preparation of these polymers. The polymers, often referred to as polyketones or polyketone polymers, have been shown to be of a structure of the repeating formula --CO${A}$ where A is the moiety of the ethylenically unsaturated hydrocarbon polymerized through the ethylenic unsaturation. For example, when the ethylenically unsaturated hydrocarbon is ethylene, the polymer is represented by the repeating formula --CO${CH_2\text{-}CH_2}$. The general process for the production of such polymers is illustrated by a number of published European Patent applications including 121965, 181014 and 222454. The process generally involves a catalyst composition formed from a compound of the Group VIII metals palladium, cobalt or nickel, the anion of a non-hydrohalogenic acid having a pKa below 2 and a bidentate ligand of phosphorus, arsenic or antimony.

The resulting polymers are relatively high molecular weight thermoplastics having utility in the production of shaped articles such as containers for food and drink and shaped parts for the automotive industry. For some particular applications it has been found desirable to have properties of a polymeric composition which are somewhat different from those of the polyketone polymer. It would be of advantage to retain the desirable properties of the polyketone, e.g. strength and impact resistance, and yet improve other properties such as melt stability. It has now been found that this is possible by blending the polyketone with a copolymer of an alkene and an $\alpha,\beta$-unsaturated acid.

Accordingly, the invention relates to a polyketone polymer composition, characterized in comprising a non-miscible blend of an alkene-$\alpha,\beta$-ethylenically unsaturated carboxylic acid copolymer with at least one linear alternating polymer of carbon monoxide and one or more ethylenically unsaturated hydrocarbons.

The polyketone polymer/alkene-unsaturated acid copolymer blends of the invention are non-miscible (that is, non molecularly-miscible, but compatible) blends having properties improved over those of the polyketone polymer or those of the alkene-unsaturated acid copolymer. The alkene-unsaturated acid copolymer exists as a discrete phase in the polyketone matrix. The blends show an improved melt stability without the loss of desirable polyketone properties of strength and impact resistance.

The polyketone polymers which are employed in the blends of the invention are linear alternating polymers of carbon monoxide and at least one ethylenically unsaturated hydrocarbon. Suitable ethylenically unsaturated hydrocarbons for use as precursors of the polyketones have from 2 to 20 carbon atoms inclusive, preferably up to 10 carbon atoms, and are aliphatic such as ethene and other $\alpha$-olefins including propene, 1-butene, 1-octane and 1-docecene, or are arylaliphatic containing an aryl substituent on an otherwise aliphatic molecule, preferably an aryl substituent on a carbon atom of the ethylenic unsaturation. Illustrative of this later class of ethylenically unsaturated hydrocarbons are styrene, p-methylstyrene, p-ethylstyrene and m-methylstyrene. Preferred polyketones are copolymers of carbon monoxide and ethylene or terpolymers of carbon monoxide, ethene and a second hydrocarbon of at least three carbon atoms, particularly an $\alpha$-olefin such as propene. Substituted unsaturated hydrocarbons, e.g. acrylate or methacrylate esters, are not excluded in polyketone polymers.

The structure of the polyketone polymers is that of a linear alternating polymer of carbon monoxide and ethylenically unsaturated hydrocarbon and the polymer will contain substantially one molecule of carbon monoxide for each molecule of hydrocarbon. When terpolymers of carbon monoxide, ethylene and a second ethylenically unsaturated hydrocarbon are employed in the blends of the invention there will be at least two units incorporating a moiety of ethylene for each unit employing a moiety of the second hydrocarbon. Preferably, there will be from 10 to 100 units employing a moiety of ethylene per unit incorporating a moiety of the second hydrocarbon. The polymer chain is therefore illustrated by the formula

$$-{CO{CH_2\text{-}CH_2}}_x\text{-}{CO{B}}_y$$

where B is the moiety obtained by polymerization of the second hydrocarbon through the ethylenic unsaturation. The --CO${CH_2\text{-}CH_2}$-units and the --CO${B}$ units are found randomly throughout the polymer chain and the ratio of y:x is no more than 0.5. In the modification of the invention where copolymers of carbon monoxide and ethylene are employed, the second hydrocarbon is not present in the polyketone polymer chain and the polymers are represented by the above formula wherein y = 0. When y is greater than 0, as in the case of terpolymers, ratios of y:x from 0.1 to 0.01 are preferred. The end groups or "caps" of the polymer chain will depend upon what materials are present during the production of the polymer and whether and how the polymer has been purified. The precise nature of the end groups is of little significance with regard to the overall properties of the polymer so that the polyketone polymer is fairly represented by the above formula. Of particular interest are the polymers of molecular weight from about 1,000 to about 200,000, particularly those of molecular weight from 10,000 to 50,000. The physical properties of such polymers depend in part on the molecular weight of the polymer, whether the polymer is a copolymer or a terpolymer and the relative proportion of any second hydrocarbon present in the case of terpolymers. Typical melting points of such polymers are from about 175°C to about 300°C, more frequently from 210°C to 270°C.

The alkene-unsaturated acid copolymers which are blended with the polyketone according to the invention are copolymers of one or more alkenes and $\alpha,\beta$-ethylenically unsaturated carboxylic acids. Although a variety of $\alpha,\beta$-ethylenically unsaturated carboxylic acids of up to 10 carbon atoms, or in some cases more, are useful as a component of the ethylene copolymers, e.g., 2-hexenoic acid, 2-octenoic acid and 2-decenoic acid, the preferred unsaturated acids are those of up to 4 carbon atoms which are acrylic acid, methacrylic acid, isocrotonic acid and crotonic acid. Acrylic acid is a particularly preferred component of the ethylene-unsaturated acid copolymer. As alkene co-monomer preference is given to ethene, propene and other lower alkenes, especially ethene and propene. Mixtures of e.g. ethene-unsaturated acid and propene-unsaturated acid copolymers, as well as terpolymers, quaterpolymers etc. of several alkenes and/or several unsaturated acids, are included in the invention as well, the word "copolymer" having a broad sense herein.

The alkene-unsaturated acid copolymers are those copolymers having a relatively large proportion of ethylene, propylene, etc. and a relatively small proportion of the unsaturated acid. Typical alkylene copolymers are from about 0.1% by weight to about 35% by weight based on total copolymer of the $\alpha,\beta$-ethylenically unsaturated carboxylic acid. The copolymers preferably have from 1% by weight to 20% by weight based on total copolymer of the unsaturated acid.

The method by which the copolymers are produced is not material and copolymers produced by a variety of methods are useful in the blends of the invention. A number of ethylene-acrylic acid copolymers, propylene-acrylic acid copolymers and ethylene-methacrylic acid copolymers are commercially available. A general discussion of the production of ethylene-unsaturated acid copolymers may be found in US 3,520,861 and US 4,351,931, incorporated herein by reference.

The blends of the invention are predominantly polyketone with a lesser quantity of the alkene-unsaturated acid copolymer. The precise percentage of the alkene-unsaturated acid copolymer to be employed is not critical and blends containing as low as 0.01% are satisfactory. Percentages from 0.1% to 35% by weight of the alkene-unsaturated acid copolymer, based on the total blend, are generally preferred. Better results are obtained through the use of 0.5% to 10% by weight, more preferred 1% to 7% by weight, of the alkene-unsaturated acid copolymer, based on total blend.

The blends of the invention may also include conventional additives such as antioxidants and stabilizers, fillers and fire retardant materials, mould release agents and other materials designed to increase the processability of the polymer or the properties of the resulting blend. Such additives are added by conventional methods prior to, together with or subsequent to the blending of the polyketone and the alkene-unsaturated acid copolymer.

The blends of the invention are preferably reinforced by the presence of glass fibre. The term "glass" is employed in the conventional meaning to indicate that class of complex metal silicates which are commonly referred to as glasses. Although the addition of rare earth metal oxides or transition metal oxides to other metal silicates on occasion will produce a glass of rather exotic properties, the glass from which the glass fibre of the invention is produced is the more common alkali metal silicate glass, particularly a sodium silicate glass. Fibres produced of such glass are conventional and are commercially available from a number of companies. The fibres are useful as reinforcements for polymeric products and are commercially used as such. However, the physical dimensions of the glass fibres are of some importance to successful utilization in a particular application as are the presence or absence of a sizing material or a coupling agent for the glass and the nature of the sizing or coupling agent.

In the polyketone polymer/alkene-unsaturated acid copolymer/glass fibre blends according to the invention, the glass fibres which contribute the most desirable properties to the reinforced blend are chopped glass fibres of circular cross-section. The fibres range in diameter from about 5 $\mu$ to about 20 $\mu$, preferably from 10 $\mu$ to 18 $\mu$. Fibres of greater or lesser diameter are satisfactory but fibres of too small a diameter do not provide the desired strength and fibres of too large a diameter contribute too much weight for the resulting strength and may not be economical. Although in some applications long continuous fibres of glass are satisfactory, it is preferred in the reinforced blends of the invention to use short fibres of glass. Lengths of glass fibre from about 2.5 mm to about 5 mm are suitable. While somewhat longer or somewhat shorter lengths are also useful, too long a glass fibre detracts from the processability of the blend-glass mixture while too short a fibre does not provide the desired strength to the blend. It is recognized that the actual length of the glass fibres in the blend will depend to some extent upon the method of blending or mixing the components, as this may mechanically break down the length of the glass fibres.

The glass fibres to be used as reinforcements for plastic materials will customarily be provided by the manufacturer with a coating of a sizing material or a coupling agent, which terms are often used interchangeably. The nature of the sizing or coupling agent will influence the interfacial shear strength of the fibre and the polymer matrix, i.e., the degree to which the polymer and glass fibre will adhere. To contribute strength to a polymer blend, the interfacial shear strength will be at least comparable in magnitude to the shear strength of the polymer so that there will be good adhesion between the polymer and the glass fibre. The interfacial shear strength is influenced by the polarity of the polymer so that for some polymers certain sizings or coupling agents work better than others. For the case of blends containing polyketone polymers and alkene-unsaturated acid copolymers, a variety of sizings are suitable, particularly sizing designed and provided particularly for use with polar polymers. Sizings are generally characterized by the nature of the size rather than the specific chemical structures which are often proprietary to the glass fibre manufacturer. Suitable sizings include water emulsions of starch and lubricating oil, aqueous dispersions of surface active materials and lubricants, silicon-containing materials such as vinyl silanes, alkyltrimethoxysilanes, amino silanes and, trimethoxysilanes which may also contain urethane, acrylate or epoxy functionalities, and non-polar hydrocarbons. For use in the reinforced blends of the invention, sizings of the type having a trimethoxysilane group attached to a hydrocarbon chain with a terminal urethane functionality are preferred although sizings having a trimethoxysilane substituent on the end of a long hydrocarbyl group are also quite suitable. Such glass fibres are commercially available.

If present, the glass fibres are preferably employed in a quantity from 1% by weight to 40% by weight based on total reinforced blend, particularly in a quantity from 5% to 25% by weight on the same basis.

The method of producing the blends or the reinforced blends of the invention is not critical so long as an intimate mixture of the components is produced without undue degradation of the components or the resulting (reinforced) blend. In one modification the components are dry mixed and converted to a reinforced blend by application of elevated temperature and pressure. In an alternate modification, the components are passed through an extruder to produce the reinforced blend as an extrudate.

A particularly useful procedure is to intimately mix the polymers in the form of granules and/or powder in a high shear mixer. "Intimately mixing" means to mix the polymers with sufficient mechanical shear and thermal energy to ensure that the components will not delaminate on processing. Intimate mixing is typically achieved by employing high shear extrusion compounding machines such as twin screw compounding extruders and thermoplastic extruders.

Thus the invention also concerns a process for preparing a polyketone polymer composition, characterized in involving the following steps:

(a) blending 0.1 to 35 parts by weight of an alkene-$\alpha$,$\beta$-ethylenically-unsaturated carboxylic acid copolymer with 99.9-65 parts by weight of at least one linear alternating polymer of carbon monoxide and one or more ethylenically unsaturated hydrocarbons,
(b) optionally, adding glass fibres,
(c) feeding the blend into an extruder,
(d) extruding the blended polymers to obtain a non-miscible blend.

The invention also relates to an article of manufacture characterized in comprising the composition in the invention.

The present blends are of particular utility in instances where moulded parts are desired which require strength when exposed to conditions of elevated temperature. The blends can be processed by means of the usual techniques, such as injection moulding, into, among other things sheets, plates and moulded objects. Illustrative of such applications are the production of internal as well as external parts for automotive applications and structured parts for application in the construction industry.

A particular application of reinforced blends according to the invention arises in the automotive industry where moulded parts must be stable to elevated temperature and mechanical impact but must also be capable of being painted to give surfaces characterized as a "Class A" finish. The reinforced blends offer sufficient processability to be moulded, by injection moulding for example, into shaped parts of sufficient mechanical strength to serve as an external part of an automobile. Moreover, the part is of sufficient stability and surface smoothness to enable painting of the part by procedures normally employed only for metal

4

parts because of the severity of the painting and drying conditions. The resulting painted surface has been determined to at least approach a Class A surface, the surface required for painted external automobile parts. Few plastic materials designated for automotive use are painted and dried by the methods conventionally applied to metal objects and yet retain such a desirable finish.

The invention is further illustrated by the following Examples.

### EXAMPLE 1

A linear alternating terpolymer of carbon monoxide, ethylene and propylene was produced in the presence of a catalyst composition formed from palladium acetate, the anion of trifluoroacetic acid and 1,3-bis[bis(2-methoxyphenyl)phosphino]propane. The melting point of the terpolymer was 220°C and the polymer had a limiting viscosity number (LVN) of 1.75 (measured at 60°C in m-cresol).

A blend of this terpolymer and 5% by weight, based on total blend, of a commercially obtainable ethylene-acrylic acid copolymer containing 9-10% by weight acrylic acid with the remainder being ethylene was prepared in an extruder. The resulting blend had a uniform appearance and a Melt Index of 5. The extrudability of the blend was termed excellent. The extruded blend was injection moulded to produce standard test specimens. The blend exhibited enhanced injection mouldability in comparison to the neat terpolymer. Electron micrographs from the moulded articles indicated that the ethylene-acrylic acid copolymer was present as a discrete phase with a phase size diameter of 0.5 to 1.0 micron. This infers good interfacial adhesion between the dispersed ethylene-acrylic acid copolymer phase and the polyketone matrix.

### EXAMPLE 2

Measurements of melting points and crystallization temperatures, or alternatively heats of melting and heats of fusion, for a 10% blend with ethylene-acrylic acid copolymer, prepared analogously to the 5% blend of Example 1, were made by the use of a differential scanning calorimeter (DSC) which employs samples of polymer or polymer composition in sealed pan containers. The pan and contents are heated at a controlled rate, typically 20°C/minute, until the sample has melted. The pan and contents are then cooled until the sample has solidified and then heated, past a second melting point, to 285°C at which temperature the sample is maintained for 10 minutes. The pan and contents are then cooled until the sample has solidified a second time. The melting and crystallization temperatures are defined as the temperatures at which the heat flow reaches a maximum (for melting) or a minimum (for crystallization). Typically the melting point, Tm, will be higher than the crystallization temperature, Tc. Although a number of factors influence the melting point and crystallization temperature, these values are also influenced by the crystallinity of the polymer. In general, the smaller the difference between the first and second melting points, the greater the degree of retained crystallinity. The same relationship is generally true for the crystallization temperatures. The higher the degree of retained crystallinity the better the melt stability of the composition.

It is also possible to determine through the use of the DSC the magnitude of the first and second heats of melting ($H_1$ and $H_2$) and the first and second heats of crystallization ($C_1$ and $C_2$) for the polymer blend. In general, the heats of crystallization for the blend will be higher than the corresponding values for the neat terpolymer. The greater the difference is, the greater the degree of crystallinity which has been retained in the blend.

A sample of the unblended terpolymer prepared in Example 1 was evaluated in the DSC for comparison. The results of the DSC measurements are shown in Table 1. In Table 1, temperatures are measured in °C and heats are measured in cal/g.

TABLE 1

| Sample | $Tm_1$ | $Tc_1$ | $Tm_2$ | $Tc_2$ | $C_1$ | $C_2$ | $H_1$ | $H_2$ |
|---|---|---|---|---|---|---|---|---|
| Unblended | 228 | 171 | 219 | 158 | 17.9 | 15.4 | 20.5 | 21.9 |
| Blend | 224 | 175 | 217 | 160 | 18.3 | 15.3 | 20.1 | 22.8 |

EXAMPLE 3

A linear alternating terpolymer of carbon monoxide, ethylene and propylene was produced by a procedure analogous to Example 1. The melting point of the terpolymer was 220°C and the polymer had a limiting viscosity number (LVN) of 1.96 (measured at 60°C in m-cresol).

Blends of this terpolymer and two different commercially obtainable ethylene-acrylic acid copolymers were separately prepared in a 15 mm twin screw extruder. The ethylene-acrylic acid copolymers contained 6% and 20% by weight, respectively of acrylic acid with the remainder being ethylene. Measurements of melting points and crystallization temperatures, or alternatively heats of melting and heats of fusion, for the blends were made according to the procedure of Example 2. A sample of the unblended terpolymer prepared above was evaluated in the DSC for comparison. The results of the DSC measurements are shown in Table 2. Samples A, B and C were prepared with the ethylene-acrylic acid copolymer containing 6% by weight acrylic acid. Samples D, E and F were prepared with the ethylene-acrylic acid copolymer containing 20% by weight acrylic acid. In Table 2, the temperatures are measured in °C and heats are measured in cal/g.

TABLE 2

| Sample | copolymer[a] % | $Tm_1$ | $Tc_1$ | $Tm_2$ | $Tc_2$ | $C_1$ | $C_2$ | $H_1$ | $H_2$ |
|---|---|---|---|---|---|---|---|---|---|
| comparison | 0 | 223 | 172 | 216 | 158 | 16.1 | 13.9 | 18.0 | 18.7 |
| A | 0.1 | 225 | 170 | 222 | 161 | 17.5 | 15.1 | 18.8 | 18.6 |
| B | 1.0 | 230 | 175 | 221 | 168 | 17.6 | 15.6 | 18.8 | 17.9 |
| C | 5.0 | 221 | 175 | 213 | 158 | 14.2 | 12.3 | 16.9 | 15.0 |
| D | 0.1 | 219 | 170 | 218 | 160 | 17.4 | 14.9 | 19.1 | 19.5 |
| E | 1.0 | 222 | 171 | 219 | 165 | 17.6 | 16.1 | 18.1 | 18.5 |
| F | 5.0 | 220 | 170 | 219 | 164 | 16.1 | 14.9 | 17.1 | 16.9 |

a % by weight ethylene-acrylic acid copolymer based on total weight of blend

EXAMPLE 4

Blends of the terpolymer of Example 3 and a commercially obtainable ethylene-methacrylic acid copolymer were prepared in a 15 mm twin screw extruder. The copolymer contained 10% by weight methacrylic acid with the remainder being ethylene. Measurements of melting points and crystallization temperatures, or alternatively heats of melting and heats of fusion, for the blends were made according to the procedure of Example 2. A sample of the terpolymer of Example 3 was evaluated in the DSC for comparison. The results of the DSC measurements are shown in Table 3. In Table 3, the temperatures are measured in °C and heats are measured in cal/g.

TABLE 3

| Sample | copolymer[a] % | $Tm_1$ | $Tc_1$ | $Tm_2$ | $Tc_2$ | $C_1$ | $C_2$ | $H_1$ | $H_2$ |
|---|---|---|---|---|---|---|---|---|---|
| comparison | 0 | 223 | 172 | 216 | 158 | 16.1 | 13.9 | 18.0 | 18.7 |
| G | 0.1 | 227 | 171 | 226 | 158 | 16.6 | 14.1 | 20.2 | 18.7 |
| H | 1.0 | 224 | 170 | 218 | 155 | 16.9 | 13.8 | 19.2 | 19.7 |
| I | 5.0 | 224 | 170 | 222 | 157 | 16.3 | 13.7 | 17.2 | 19.0 |

a % by weight ethylene-methacrylic acid copolymer based on total weight of blend

EXAMPLE 5

A linear alternating polymer of carbon monoxide and ethylene is blended with 5% of the ethylene-methacrylic acid copolymer of Example 4, and with 0.1% of the acrylic acid-propylene copolymer of Example 11.

Improved melt stability without the loss of strength and impact resistance, as compared with the unblended polymer, is observed in both blends.

EXAMPLE 6

Blends of the terpolymer of Example 1 were prepared with the ethylene-acrylic acid copolymer (EAA) of Example 1 and with commercial glass fibres (GF). Blending or mixing was accomplished by passing the components through an extruder at a temperature of about 255°C and pressures of from about 3.5 MPa to about 7 MPa to prepare pellets. The resulting pellets were injection moulded to produce standard ASTM test bars from which physical properties could be measured. In one experiment, the flex modulus and flex strength of several blends were determined and compared with the properties of the polymers alone and two component mixtures of polymer and EAA and polymer and GF. The results are shown in Table 4 wherein all percentages are percents by weight based on total mixture.

TABLE 4

| Terpolymer, % | EAA, % | GF, % | Flex. Mod., MPa | Flex. Str. MPa | Notched Izod kg |
|---------------|--------|-------|-----------------|----------------|-----------------|
| 100 | -- | -- | 1420 | 49.6 | 23 |
| 95 | 5 | -- | 1462 | 51.7 | 29 |
| 90 | 10 | -- | 1296 | 45.5 | 23 |
| 80 | 10 | 10* | 2103 | 56.5 | 17 |
| 85 | 5 | 10** | 2482 | 61.4 | 17 |
| 90 | -- | 10** | 2096 | 71.0 | 11 |

\* non-polar hydrocarbon trimethoxysilane (Sizing A) sizing
\*\* urethane modified trimethoxysilane (Sizing B) sizing

EXAMPLE 7

Samples of several polymer blends or mixtures were prepared according to the general procedure of Example 6. The samples were oven aged for one day, four days and seven days (the control) and withdrawn and tested. The tensile strength at yield and the elongation at break of the samples were determined at each testing. The results are shown in Tables 5 and 6 wherein all percentages are percents by weight based on total mixture.

TABLE 5

| Tensile Strength, MPa | | | | | |
|-----------------------|--------|-------|---------|-------|--------|
| Terpolymer, % | EAA, % | GF, % | Control | 1 day | 4 days |
| 95 | 5 | -- | 50.95 | 58.64 | 62.62 |
| 90 | -- | 10 | 73.69 | 79.61 | 76.06 |
| 80 | 10 | 10* | 44.91 | 52.17 | 54.29 |
| 85 | 5 | 10** | 53.18 | 60.14 | 63.62 |

\* Sizing A
\*\* Sizing B

7

TABLE 6

| Elongation to Break, dm | | | | | |
|---|---|---|---|---|---|
| Polymer, % | EAA, % | GF, % | Control | 1 day | 4 days |
| 95 | 5 | -- | 12.5 ± 1 | 7.1 ± 1 | 5.3 ± 0.25 |
| 90 | -- | 10 | 2.5 ± 0.25 | 2.5 ± 0.25 | 1.8 ± 0.5 |
| 80 | 10 | 10* | 13.0 ± 5.3 | 5.6 ± 0.5 | 3.8 ± 0.5 |
| 85 | 5 | 10** | 13.5 ± 1.5 | 6.9 ± 0.8 | 4.6 ± 0.25 |

\* Sizing A
\*\* Sizing B

## EXAMPLE 8

The heat sag properties of several blends were measured by placing a test bar of the blend of dimensions approximately 18 cm by 28 cm by 0.3 cm in an oven on a support for one end of the bar. The temperature was raised for 30 minutes and the sag of the unsupported end of the bar was measured. A blend of the terpolymer of Example 1 with 5% EAA and 10% GF (Sizing B) showed 0.25 cm heat sag at 163°C and 0.5 cm heat sag at 191°C.

## EXAMPLE 9

Blends of the terpolymer of Example 1 with 5% EAA and 10% GF (Sizing B) were prepared in an extruder and subsequently injection moulded into discs at various temperatures. The moulded discs were evaluated for Gardner impact resistance using a 0.9 kg weight. The results are shown in Table 7.

TABLE 7

| Mould Temperature | Gardner Impact Resistance, m kg |
|---|---|
| Cold (Room temperature) | 0.34 |
| 38°C | 0.35 |
| 66°C | 0.37 |

## EXAMPLE 10

A linear alternating terpolymer of carbon monoxide, ethylene and propylene was produced by the procedure of Example 1. The terpolymer had a melting point of 220°C and LVN of 1.76. The terpolymer was extruded with 10% of the glass fibres of Example 6 and 5% of the ethylene-acrylic acid copolymer of Example 1, to prepare pellets.

The pellets were injection moulded with a two cavity mould, each cavity of which was double gated. The moulded part was a headlight bezel for an automobile. The barrel temperature of the injection moulder ranged from 249°C to 270°C, the mould temperature was 66°C and the cycle time was 35 sec. Upon trimming, the parts weighed about 290 g each.

Priming of the bezel was conducted under commercial conditions involving a rinse at 10-60°C with an aqueous phosphate solution, drying and application of a conductive primer. The primer was cured at an average temperature of 150°C for 28 minutes and then heated at about 120°C for 15 minutes. Subsequently, the bezel was topcoated by electrostatic deposition at temperatures of about 200 °C to about 210°C for approximately 30 minutes. The part was then baked at about 130°C for an additional 30 minutes.

The parts survived the paint line with minimal sag and warpage and were satisfactory in adhesion and thermal shock tests. The painted parts are aesthetically pleasing.

EXAMPLE 11

Example 2 was repeated, but with the following differences:

a) the polyketone of Example 3 was used instead of the one of Example 1,

b) instead of an ethylene-acrylic acid copolymer, a copolymer of propylene and acrylic acid was used. The acrylic acid content of the commercially obtainable product was 6% by weight.

c) blends of polyketone and propylene-acrylic acid copolymer, containing 0.1 %w, 1 %w and 5 %w of copolymer based on total blend were prepared.

The blend containing 5 %w of copolymer was not further evaluated because of the unavailability of an adequate extruder.

Samples of the 0.1% and 1% by weight blends were evaluated in the DSC. A sample of the terpolymer prepared in Example 3 was evaluated in the DSC for comparison. The results of the DSC measurements are given in Table 8 which shows the improved melt stability of the blend compositions. In Table 8, temperatures are measured in °C and heats are measured in cal/g.

TABLE 8

| Sample | $Tm_1$ | $Tc_1$ | $Tm_2$ | $Tc_2$ | $C_1$ | $C_2$ | $H_1$ | $H_2$ |
|---|---|---|---|---|---|---|---|---|
| comparison | 223 | 172 | 216 | 158 | 16.1 | 13.9 | 18.0 | 18.7 |
| 0.1 %w blend | 226 | 176 | 218 | 167 | 17.6 | 14.9 | 18.6 | 19.3 |
| 1 %w blend | 231 | 171 | 218 | 164 | 16.7 | 15.2 | 19.0 | 18.7 |

EXAMPLE 12

Example 11 was repeated, but with a propylene-ethylene-acrylic acid terpolymer, instead of the propylene-acrylic acid copolymer. The commercially obtainable terpolymer contained 19 %w of ethylene and 6 %w of acrylic acid, based on total polymer.

The results of the measurements are shown in Table 9.

TABLE 9

| Sample | $Tm_1$ | $Tc_1$ | $Tm_2$ | $Tc_2$ | $C_1$ | $C_2$ | $H_1$ | $H_2$ |
|---|---|---|---|---|---|---|---|---|
| comparison | 223 | 172 | 216 | 158 | 16.1 | 13.9 | 18.0 | 18.7 |
| 0.1 %w blend | 227 | 169 | 223 | 158 | 17.1 | 14.8 | 18.3 | 17.8 |
| 1 %w blend | 225 | 172 | 220 | 165 | 17.1 | 15.1 | 19.4 | 17.8 |

**Claims**
**Claims for the following Contracting States : AT, BE, CH, DE, FR, GB, GR, LI, IT, NL, SE**

1. Polyketone polymer composition, characterized in comprising a non-miscible blend of an alkene-$\alpha,\beta$-ethylenically unsaturated carboxylic acid copolymer with at least one linear alternating polymer of carbon monoxide and one or more ethylenically unsaturated hydrocarbons.

2. A composition as claimed in claim 1, characterized in that the $\alpha,\beta$-unsaturated carboxylic acid has up to 4 carbon atoms and the copolymer is present in an amount from 0.1% to 35% by weight based on the total blend.

3. A composition as claimed in claim 1 or 2, characterized in that the alkene-unsaturated acid copolymer is an ethene-unsaturated acid copolymer, a propene-unsaturated acid copolymer, an ethene-propene unsaturated acid terpolymer or a mixture thereof.

4. A composition as claimed in any of claims 1-3, characterized in that the linear alternating polymer is represented by the formula

9

$$-\{CO\{CH_2-CH_2\}\}_x^- \{CO\{B\}\}_y$$

wherein B is the moiety of an ethylenically unsaturated hydrocarbon of at least three carbon atoms and the ratio of y:x is no more than 0.5.

5. A composition as claimed in claim 4, characterized in that B is the moiety of propylene.

6. A composition as claimed in claim 4, characterized in that y = 0.

7. A composition as claimed in any of claims 1-6, characterized in that the $\alpha,\beta$-unsaturated carboxylic acid is methacrylic acid.

8. A composition as claimed in any of claims 1-6, characterized in that the $\alpha,\beta$-unsaturated carboxylic acid is acrylic acid.

9. A composition as claimed in any of claims 1-8, characterized in that it is reinforced with glass fibre.

10. A composition as claimed in claim 9, characterized in that the linear alternating polyketone polymer is present in an amount of 45-98% by weight, based on total reinforced composition; the copolymer of alkene and unsaturated acid is present in an amount of 1-15% by weight, based on total reinforced composition; and the glass fibres are present in an amount of 1-40% by weight, based on total reinforced composition.

11. A composition as claimed in claim 10, characterized in that the glass fibres are present in an amount of 5-20 %w, based on total reinforced composition.

12. An article of manufacture characterized in comprising the composition of any of claims 1-11.

13. Process for preparing a polymer composition, characterized in involving the following steps:
(a) blending 0.1 to 35 parts by weight of an alkene-$\alpha,\beta$-ethylenically-unsaturated carboxylic acid copolymer with 99.9-65 parts by weight of at least one linear alternating polymer of carbon monoxide and one or more ethylenically unsaturated hydrocarbons,
(b) optionally, adding glass fibres,
(c) feeding the blend into an extruder,
(d) extruding the blended polymers to obtain a non-miscible blend.

**Claims for the following Contracting State : ES**

1. Process for preparing a polyketone polymer composition, characterized by preparing a non-miscible blend by blending an alkene-$\alpha,\beta$-ethylenically unsaturated carboxylic acid copolymer with at least one linear alternating polymer of carbon monoxide and one or more ethylenically unsaturated hydrocarbons.

2. A process as claimed in claim 1, characterized in that the $\alpha,\beta$-unsaturated carboxylic acid has up to 4 carbon atoms and the copolymer is present in an amount from 0.1% to 35% by weight based on the total blend.

3. A process as claimed in claim 1 or 2, characterized in that the alkene-unsaturated acid copolymer is an ethene-unsaturated acid copolymer, a propene-unsaturated acid copolymer, an ethene-propene unsaturated acid terpolymer or a mixture thereof.

4. A process as claimed in any of claims 1-3 characterized in that the linear alternating polymer is represented by the formula

$$-\{CO\{CH_2-CH_2\}\}_x^- \{CO\{B\}\}_y$$

wherein B is the moiety of an ethylenically unsaturated hydrocarbon of at least three carbon atoms and the ratio of y:x is no more than 0.5.

5. A process as claimed in claim 4, characterized in that B is the moiety of propylene.

6. A process as claimed in claim 4, characterized in that y = 0.

7. A process as claimed in any of claims 1-6, characterized in that the $\alpha,\beta$-unsaturated carboxylic acid is methacrylic acid.

8. A process as claimed in any of claims 1-6, characterized in that the $\alpha,\beta$-unsaturated carboxylic acid is acrylic acid.

9. A process as claimed in any of claims 1-8, characterized in that a reinforced composition is prepared by using glass fibre as an additional blend component.

10. A process as claimed in claim 9, characterized in that the linear alternating polyketone polymer is blended in an amount of 45-98% by weight, based on total reinforced composition; the copolymer of alkene and unsaturated acid is blended in an amount of 1-15% by weight, based on total reinforced composition; and the glass fibres are blended in an amount of 1-40% by weight, based on total reinforced composition.

11. A process as claimed in claim 10, characterized in that the glass fibres are blended in an amount of 5-20 %w, based on total reinforced composition.

12. An article of manufacture characterized in comprising a composition prepared by the process of any of claims 1-11.

13. Process for preparing a polymer composition, characterized in involving the following steps:
(a) blending 0.1 to 35 parts by weight of an alkene-$\alpha,\beta$-ethylenically-unsaturated carboxylic acid copolymer with 99.9-65 parts by weight of at least one linear alternating polymer of carbon monoxide and one or more ethylenically unsaturated hydrocarbons,
(b) optionally, adding glass fibres,
(c) feeding the blend into an extruder,
(d) extruding the blended polymers to obtain a non-miscible blend.

**Patentansprüche**
**Patentansprüche für folgende Vertragsstaaten : AT, BE, CH, DE, FR, GB, GR, LI, IT, NL, SE**

1. Polyketonpolymer-Zusammensetzung, dadurch gekennzeichnet, daß sie ein unmischbares Gemisch aus einem Alken-$\alpha,\beta$-ethylenisch ungesättigter Carbonsäure-Copolymer mit wenigstens einem linearen alternierenden Polymer von Kohlenmonoxid und einem oder mehreren ethylenisch ungesättigten Kohlenwasserstoffen umfaßt.

2. Zusammensetzung nach Anspruch 1, dadurch gekennzeichnet, daß die $\alpha,\beta$-ungesättigte Carbonsäure bis zu 4 Kohlenstoffatome aufweist und das Copolymer in einer Menge von 0,1 bis 35 Gew.-% zugegen ist, bezogen auf das Gesamtgemisch.

3. Zusammensetzung nach Anspruch 1 oder 2, dadurch gekennzeichnet, daß das Alken-ungesättigte Säure-Copolymer ein Ethen-ungesättigte Säure-Copolymer,ein Propen-ungesättigte Säure-Copolymer, ein Ethen-Propen-ungesättigte Säure-Terpolymer oder ein Gemisch hievon ist.

4. Zusammensetzung nach einem der Ansprüche 1 bis 3, dadurch gekennzeichnet, daß das lineare alternierende Polymer durch die Formel

$$-\{CO\{CH_2-CH_2\}\}_x - -\{CO\{B\}\}_y$$

dargestellt ist, worin B der Rest eines ethylenisch ungesättigten Kohlenwasserstoffes mit wenigstens drei Kohlenstoffatomen ist und das Verhältnis y:x nicht größer als 0,5 ist.

**5.** Zusammensetzung nach Anspruch 4, dadurch gekennzeichnet, daß B ein Propylenrest ist.

**6.** Zusammensetzung nach Anspruch 4, dadurch gekennzeichnet, daß y den Wert 0 hat.

**7.** Zusammensetzung nach einem der Ansprüche 1 bis 6, dadurch gekennzeichnet, daß die $\alpha,\beta$-ungesättigte Carbonsäure Methacrylsäure ist.

**8.** Zusammensetzung nach einem der Ansprüche 1 bis 6, dadurch gekennzeichnet, daß die $\alpha,\beta$-ungesättigte Carbonsäure Acrylsäure ist.

**9.** Zusammensetzung nach einem der Ansprüche 1 bis 8, dadurch gekennzeichnet, daß sie durch Glasfasern verstärkt ist.

**10.** Zusammensetzung nach Anspruch 9, dadurch gekennzeichnet, daß das lineare alternierende Polyketonpolymer in einer Menge von 45 bis 98 Gew.-%, bezogen auf die gesamte verstärkte Zusammensetzung, zugegen ist; das Copolymer aus Alken und ungesättigter Säure in einer Menge von 1 bis 15 Gew.-%, bezogen auf die gesamte verstärkte Zusammensetzung, zugegen ist; und die Glasfasern in einer Menge von 1 bis 40 Gew.-%, bezogen auf die gesamte verstärkte Zusammensetzung, zugegen sind.

**11.** Zusammensetzung nach Anspruch 10, dadurch gekennzeichnet, daß die Glasfasern in einer Menge von 5 bis 20 Gew.-%, bezogen auf die gesamte verstärkte Zusammensetzung, zugegen sind.

**12.** Fertigungsgegenstand, dadurch gekennzeichnet, daß er die Zusammensetzung nach einem der Ansprüche 1 bis 11 umfaßt.

**13.** Verfahren zur Herstellung einer Polymerzusammensetzung, dadurch gekennzeichnet, daß es die folgenden Stufen einschließt:
(a) Mischen von 0,1 bis 35 Gewichtsteilen eines Alken-$\alpha,\beta$-ethylenisch ungesättigte Carbonsäure-Copolymers mit 99,9 bis 65 Gewichtsteilen wenigstens eines linearen alternierenden Polymers von Kohlenmonoxid mit einem oder mit mehreren ethylenisch ungesättigten Kohlenwasserstoffen,
(b) gewünschtenfalls Zusetzen von Glasfasern,
(c) Einführen des Gemisches in einen Extruder,
(d) Extrudieren der gemischten Polymere zur Ausbildung eines unmischbaren Gemisches.

**Patentansprüche für folgenden Vertragsstaat : ES**

**1.** Verfahren zur Herstellung einer Polyketonpolymer-Zusammensetzung, gekennzeichnet durch Bereiten eines unmischbaren Gemisches durch Vermischen eines Alken-$\alpha,\beta$-ethylenisch ungesättigte Carbonsäure-Copolymers mit wenigstens einem linearen alternierenden Polymer von Kohlenmonoxid und einem oder mehreren ethylenisch ungesättigten Kohlenwasserstoffen.

**2.** Verfahren nach anspruch 1, dadurch gekennzeichnet, daß die $\alpha,\beta$-ungesättigte Carbonsäure bis zu 4 Kohlenstoffatome aufweist und das Copolymer in einer Menge von 0,1 bis 35 Gew.-%, bezogen auf das Gesamtgemisch, zugegen ist.

**3.** Verfahren nach Anspruch 1 oder 2, dadurch gekennzeichnet, daß das Alken-ungesättigte Säure-Copolymer ein Ethen-ungesättigte Säure-Copolymer, ein Propen-ungesättigte Säure-Copolymer, ein Ethen-Propen-ungesättigte Säure-Terpolymer oder ein Gemisch hievon ist.

**4.** Verfahren nach einem der Ansprüche 1 bis 3, dadurch gekennzeichnet, daß das lineare alternierende Polymer durch die Formel

$$-\{CO\{CH_2-CH_2\}\}_x--\{CO\{B\}\}_y$$

dargestellt ist, worin B der Rest eines ethylenisch ungesättigten Kohlenwasserstoffes mit wenigstens drei Kohlenstoffatomen ist und das Verhältnis y:x nicht größer als 0,5 ist.

5. Verfahren nach Anspruch 4, dadurch gekennzeichnet, daß B ein Propylenrest ist.

6. Verfahren nach Anspruch 4, dadurch gekennzeichnet, daß y den Wert 0 hat.

7. Verfahren nach einem der Ansprüche 1 bis 6, dadurch gekennzeichnet, daß die $\alpha,\beta$-ungesättigte Carbonsäure Methacrylsäure ist.

8. Verfahren nach einem der Ansprüche 1 bis 6, dadurch gekennzeichnet, daß die $\alpha,\beta$-ungesättigte Carbonsäure Acrylsäure ist.

9. Verfahren nach einem der Ansprüche 1 bis 8, dadurch gekennzeichnet, daß eine verstärkte Zusammensetzung durch Anwendung von Glasfaser als zusätzliche Mischungskomponente hergestellt wird.

10. Verfahren nach Anspruch 9, dadurch gekennzeichnet, daß das lineare alternierende Polyketonpolymer in einer Menge von 45 bis 98 Gew.-%, bezogen auf die gesamte verstärkte Zusammensetzung, zugegen ist; das Copolymer aus Alken und ungesättigter Säure in einer Menge von 1 bis 15 Gew.-%, bezogen auf die gesamte verstärkte Zusammensetzung, zugegen ist; und die Glasfasern in einer Menge von 1 bis 40 Gew.-%, bezogen auf die gesamte verstärkte Zusammensetzung, zugegen sind.

11. Verfahren nach Anspruch 10, dadurch gekennzeichnet, daß die Glasfasern in einer Menge von 5 bis 20 Gew.-%, bezogen auf die gesamte verstärkte Zusammensetzung, zugegen sind.

12. Fertigungsgegenstand, dadurch gekennzeichnet, daß er eine Zusammensetzung umfaßt, die nach dem Verfahren eines der Ansprüche 1 bis 11 hergestellt worden ist.

13. Verfahren zur Herstellung einer Polymerzusammensetzung, dadurch gekennzeichnet, daß es die folgenden Stufen einschließt:
(a) Mischen von 0,1 bis 35 Gewichtsteilen eines Alken-$\alpha,\beta$-ethylenisch ungesättigte Carbonsäure-Copolymers mit 99,9 bis 65 Gewichtsteilen wenigstens eines linearen alternierenden Polymers von Kohlenmonoxid mit einem oder mit mehreren ethylenisch ungesättigten Kohlenwasserstoffen,
(b) gewünschtenfalls Zusetzen von Glasfasern,
(c) Einführen des Gemisches in einen Extruder,
(d) Extrudieren der gemischten Polymere zur Ausbildung eines unmischbaren Gemisches.

**Revendications**
**Revendications pour les Etats contractants suivants : AT, BE, CH, DE, FR, GB, GR, IT, LI, NL, SE**

1. Une composition de polymère de polycétone, caractérisée en ce qu'elle comprend un mélange nonmiscible d'un copolymère alcène-acide carboxylique éthyléniquement insaturé en alpha,bêta avec au moins un polymère linéaire alterné d'oxyde de carbone et d'un ou plusieurs hydrocarbures éthyléniquement insaturés.

2. Une composition selon la revendication 1, caractérisée en ce que l'acide caraboxylique insaturé en alpha,bêta a au maximum 4 atomes de carbone et que le copolymère est présent à raison d'une quantité comprise entre 0,1 % et 35 % en poids par rapport au mélange total.

3. Une composition selon la revendication 1 ou 2, caractérisée en ce que le copolymère alcène-acide insaturé est un copolymère éthène-acide insaturé, un copolymère propène-acide insaturé, un terpolymère éthène-propène-acide insaturé ou un mélange de tels polymères.

4. Une composition selon l'une quelconque des revendications 1-3, caractérisée en ce que le polymère linéaire alterné est représenté par la formule

$$-\left[CO\left[CH_2-CH_2\right]\right]_x-\left[CO\left[B\right]\right]_y$$

où B est la portion d'un hydrocarbure éthyléniquement insaturé d'au moins trois atomes de carbone et le rapport y:x n'est pas supérieur à 0,5.

5. Une composition selon la revendication 4, caractérisée en ce que B est la portion de propylène.

6. Une composition selon la revendication 4, caractérisée en ce que y = 0.

7. Une composition selon l'une quelconque des revendications 1-6, caractérisée en ce que l'acide carboxylique insaturé en alpha,bêta est l'acide méthacrylique.

8. Une composition selon l'une quelconque des revendications 1-6, caractérisée en ce que l'acide carboxylique insaturé en alpha,bêta est l'acide acrylique.

9. Une composition selon l'une quelconque des revendications 1-8, caractérisée en ce qu'elle est renforcée avec de la fibre de verre.

10. Une composition selon la revendication 9, caractérisée en ce que le polymère de polycétone linéaire alterné est présent à raison d'une quantité de 45-98 % en poids, par rapport à la composition renforcée totale ; le copolymère d'alcène et d'acide insaturé est présent à raison de 1-15 % en poids, par rapport à la composition renforcée totale ; et les fibres de verre sont présentes à raison de 1-40 % en poids, par rapport à la composition renforcée totale.

11. Une composition selon la revendication 10, caractérisée en ce que les fibres de verre sont présentes à raison de 5-20 % en poids, par rapport à la composition renforcée totale.

12. Un article manufacturé caractérisé en ce qu'il comprend la composition de l'une quelconque des revendications 1-11.

13. Un procédé pour la préparation d'une composition de polymère, caractérisé en ce qu'il comporte les étapes suivantes :
    a) mélange de 0,1 à 35 parties en poids d'un copolymère alcène-acide carboxylique éthyléniquement insaturé en alpha,bêta avec 99,9 à 65 parties en poids d'au moins un polymère linéaire alterné d'oxyde de carbone et d'un ou plusieurs hydrocarbures éthyléniquement insaturés,
    b) éventuellement, addition de fibres de verre,
    c) introduction du mélange dans une extrudeuse,
    d) extrusion des polymères mélangés de manière à donner un mélange non-miscible.

**Revendications pour l'Etat contractant suivant : ES**

1. Procédé pour la préparation d'une composition de polymère de polycétone, caractérisé en ce qu'on prépare un mélange non-miscible en mélangeant un copolymère alcène-acide carboxylique éthyléniquement insaturé en alpha,bêta avec au moins un polymère linéaire alterné d'oxyde de carbone et d'un ou plusieurs hydrocarbures éthyléniquement insaturés.

2. Un procédé selon la revendication 1, caractérisé en ce que l'acide carboxylique insaturé en alpha,bêta a au maximum 4 atomes de carbone et que le copolymère est présent à raison de 0,1 % à 35 % en poids par rapport au mélange total.

3. Un procédé selon la revendication 1 ou 2, caractérisé en ce que le copolymère alcène-acide insaturé est un copolymère éthène-acide insaturé, un copolymère propène-acide insaturé, un terpolymère éthène-propène-acide insaturé ou un mélange de tels polymères.

4. Un procédé selon l'une quelconque des revendications 1-3, caractérisé en ce que le polymère linéaire alterné est représenté par la formule

$$-\{CO\{CH_2-CH_2\}\}_x--\{CO\{B\}\}_y$$

où B est la portion d'un hydrocarbure éthyléniquement insaturé d'au moins trois atomes de carbone et le rapport y:x n'est pas supérieur à 0,5.

5. Un procédé selon la revendication 4, caractérisé en ce que B est la portion de propylène.

6. Un procédé selon la revendication 4, caractérisé en ce que y = 0.

7. Un procédé selon l'une quelconque des revendications 1-6, caractérisé en ce que l'acide carboxylique insaturé en alpha,bêta est l'acide méthacrylique.

8. Un procédé selon l'une quelconque des revendications 1-6, caractérisé en ce que l'acide carboxylique insaturé en alpha,bêta est l'acide acrylique.

9. Un procédé selon l'une quelconque des revendications 1-8, caractérisé en ce qu'on prépare une composition renforcée en utilisant de la fibre de verre comme constituant supplémentaire du mélange.

10. Un procédé selon la revendication 9, caractérisé en ce que le polymère de polycétone linéaire alterné est mélangé à raison de 45-98 % en poids, par rapport à la composition renforcée totale ; le copolymère d'alcène et d'acide insaturé est mélangé à raison de 1-15 % en poids, par rapport à la composition renforcée totale ; et les fibres de verre sont mélangées à raison de 1-40 % en poids, par rapport à la composition renforcée totale.

11. Une composition selon la revendication 10, caractérisée en ce que les fibres de verre sont mélangées à raison de 5-20 % en poids, par rapport à la composition renforcée totale.

12. Un article manufacturé caractérisé en ce qu'il comprend une composition préparée par un procédé selon l'une quelconque des revendications 1-11.

13. Procédé pour la préparation d'une composition de polymère, caractérisé en ce qu'il comporte les étapes suivantes :
    (a) mélange de 0,1 à 35 parties en poids d'un copolymère alcène-acide carboxylique éthyléniquement insaturé en alpha,bêta avec 99,9 à 65 parties en poids d'un moins un polymère linéaire alterné d'oxyde de carbone et d'un ou plusieurs hydrocarbures éthyléniquement insaturés,
    (b) éventuellement, addition de fibres de verre,
    (c) introduction du mélange dans une extrudeuse,
    (d) extrusion des polymères mélangés de manière à donner un mélange non-miscible.